(19) **Europäisches Patentamt**
**European Patent Office**
**Office européen des brevets**

(11) **EP 3 337 252 A1**

(12) **EUROPEAN PATENT APPLICATION**
published in accordance with Art. 153(4) EPC

(43) Date of publication:
20.06.2018 Bulletin 2018/25

(51) Int Cl.:
*H04W 56/00* (2009.01)    *H04W 16/14* (2009.01)
*H04W 72/04* (2009.01)

(21) Application number: 16835131.0

(22) Date of filing: 08.08.2016

(86) International application number:
PCT/JP2016/073262

(87) International publication number:
WO 2017/026434 (16.02.2017 Gazette 2017/07)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 13.08.2015 JP 2015159999

(71) Applicant: NTT DOCOMO, INC.
Chiyoda-ku
Tokyo 100-6150 (JP)

(72) Inventors:
• HARADA, Hiroki
  Tokyo 100-6150 (JP)
• NAGATA, Satoshi
  Tokyo 100-6150 (JP)
• JIANG, Yu
  Beijing 100190 (CN)
• LIU, Liu
  Beijing 100190 (CN)
• JIANG, Huiling
  Beijing 100190 (CN)

(74) Representative: Hoffmann Eitle
Patent- und Rechtsanwälte PartmbB
Arabellastraße 30
81925 München (DE)

(54) **USER TERMINAL, WIRELESS BASE STATION, AND WIRELESS COMMUNICATION METHOD**

(57) The present invention is designed to carry out adequate communication even in carriers in which LBT is executed. According to one aspect of the present invention, a user terminal communicates by using a cell in which listening is executed before signals are transmitted, and has a receiving section that receives a discovery signal, which includes a first synchronization signal and a second synchronization signal, and a control section that specifies an index of a subframe, in which the second synchronization signal is received, and the second synchronization signal is a different signal from an SSS (Secondary Synchronization Signal) that is used in an existing system.

FIG. 2

## Description

Technical Field

The present invention relates to a user terminal, a radio base station and a radio communication method in next-generation mobile communication systems.

Background Art

In the UMTS (Universal Mobile Telecommunications System) network, the specifications of long term evolution (LTE) have been drafted for the purpose of further increasing high speed data rates, providing lower delays and so on (see non-patent literature 1). In addition, successor systems of LTE (referred to as, for example, "LTE-A" (LTE-Advanced), "FRA" (Future Radio Access), "5G" (5th generation mobile communication system) and so on) are also under study for the purpose of achieving further broadbandization and increased speed beyond LTE.

The specifications of Rel. 8 to 12 LTE have been drafted assuming exclusive operations in frequency bands that are licensed to operatorsthat is, licensed bands. As licensed bands, for example, 800 MHz, 1.7 GHz and 2 GHz are used.

In recent years, user traffic has been increasing steeply following the spread of high-performance user terminals (UE: User Equipment) such as smart-phones and tablets. Although more frequency bands need to be added to meet this increasing user traffic, licensed bands have limited spectra (licensed spectra).

Consequently, a study is in progress with Rel. 13 LTE to enhance the frequencies of LTE systems by using bands of unlicensed spectra (also referred to as "unlicensed bands") that are available for use apart from licensed bands (see non-patent literature 2). For unlicensed bands, for example, the 2.4 GHz band and the 5 GHz band, where Wi-Fi (registered trademark) and Bluetooth (registered trademark) can be used, are under study for use.

To be more specific, with Rel. 13 LTE, a study is in progress to execute carrier aggregation (CA) between licensed bands and unlicensed bands. Communication that is carried out by using unlicensed bands with licensed bands like this is referred to as "LAA" (License-Assisted Access). Note that, in the future, dual connectivity (DC) between licensed bands and unlicensed bands and stand-alone in unlicensed bands may become the subject of study under LAA.

For unlicensed bands in which LAA is run, a study is in progress to introduce interference control functionality in order to allow co-presence with other operators' LTE, Wi-Fi or different systems. In Wi-Fi, LBT (Listen Before Talk), which is based on CCA (Clear Channel Assessment), is used as an interference control function within the same frequency. LBT refers to the technique of "listening" (sensing) before transmitting signals, and controlling transmission based on the result of listening. In Japan and Europe, the LBT function is stipulated as mandatory in systems such as Wi-Fi that is run in the 5 GHz unlicensed band.

Citation List

Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: AT&T, Drivers, Benefits and Challenges for LTE in Unlicensed Spectrum, 3GPP TSG-RAN Meeting #62 RP-131701

Summary of Invention

Technical Problem

Now, a study is in progress to transmit, in unlicensed band cells, signals for use by UEs for RRM (Radio Resource Management) measurements and so on (referred to as, for example, the "discovery signal" (DS).

However, in an environment in which LBT is executed, the subframe to transmit the DS changes depending on the result of LBT, so that a UE cannot establish frame timing synchronization based on the DS received in the UE. Consequently, it becomes difficult to conduct cell search and/or RRM measurements in LAA accurately (with high reliability), and there is a threat that adequate communication is not possible.

The present invention has been made in view of the above, and it is therefore an object of the present invention to provide a user terminal, a radio base station and a radio communication method that allow adequate communication even in carriers (for example, unlicensed bands) that execute LBT (pre-transmission listening).

Solution to Problem

According one example of the present invention, a user terminal communicates by using a cell in which listening is executed before signals are transmitted, and has a receiving section that receives a discovery signal, which includes a first synchronization signal and a second synchronization signal, and a control section that specifies an index of a subframe, in which the second synchronization signal is received, and the second synchronization signal is a different signal from an SSS (Secondary Synchronization Signal) used in an existing system.

Advantageous Effects of Invention

According to the present invention, it is possible to carry out adequate communication even in carriers in which LBT is executed.

Brief Description of Drawings

FIG. 1A is a diagram to show FDD PSS/SSS radio resource locations in an existing system, and FIG. 1B is a diagram to show examples of the locations of PSS/SSS radio resources in DSs (DRSs) in LAA;
FIG. 2 is a diagram to explain the concept of the first embodiment;
FIG. 3A diagram to show an SSS that is transmitted in subframe #0 ($SSS_1$), and FIG. 3B is a diagram to show an SSS that is transmitted in subframe #5 ($SSS_2$);
FIG. 4 is a diagram to show the corresponding relationships among ($m_0$, $m_1$) and $N_{ID}^{(1)}$ in an existing SSS (mapping table);
FIG. 5A is a diagram to show an SSS that is transmitted in subframes #0 to #4 ($SSS_1$), and FIG. 5B is a diagram to show an SSS that is transmitted in subframes #5 to #9 ($SSS_2$);
FIG. 6 is a diagram to show examples of corresponding relationships among ($m_0$, $m_1$), $N_{ID}^{(1)}$ and N in an SSS according to the first embodiment (mapping table);
FIG. 7 is a is a diagram to show examples of corresponding relationships among the subframe index, the scrambling sequence and the resource configuration in a second embodiment;
FIG. 8A is a diagram to show examples of candidate SSS resources according to embodiment 2.1, and FIGs. 8B and 8C are diagrams to show examples of DSs, each transmitted in a DRS occasion;
FIG. 9A is a diagram to show examples of candidate SSS resources according to embodiment 2.2, and FIG. 9B is a diagram to show examples of DSs transmitted in DRS occasions;
FIG. 10A is a diagram to show examples of candidate SSS resources according to embodiment 2.3, and FIGs. 10B and FIG. 10C are diagrams to show examples of DSs transmitted in DRS occasions;
FIG. 11A is a diagram to show examples of candidate SSS resources according to embodiment 2.3, and FIG. 11B is a diagram to show another example of a DS transmitted in a DRS occasion;
FIG. 12 is a diagram to show examples of corresponding relationships among ($m_0$, $m_1$) and N in an eSSS according to a third embodiment (mapping table);
FIG. 13A is a diagram to show an example of mapping an eSSS to an empty symbol, and FIG. 13B is a diagram to show an example of mapping an eSSS to an empty RE;
FIG. 14 is a diagram to show an example of a schematic structure of a radio communication system according to an embodiment of the present invention;
FIG. 15 is a diagram to show an example of an overall structure of a radio base station according to an embodiment of the present invention;
FIG. 16 is a diagram to show an example of a functional structure of a radio base station according to an embodiment of the present invention;
FIG. 17 is a diagram to show an example of an overall structure of a user terminal according to an embodiment of the present invention; and
FIG. 18 is a diagram to show an example of a functional structure of a user terminal according to an embodiment of the present invention.

Description of Embodiments

In systems (for example, LAA systems) that run LTE/LTE-A in unlicensed bands, interference control functionality is likely to be necessary in order to allow co-presence with other operators' LTE, Wi-Fi, or other different systems. Note that, systems that run LTE/LTE-A in unlicensed bands may be collectively referred to as "LAA," "LAA-LTE," "LTE-U," "U-LTE" and so on, regardless of whether the mode of operation is CA, DC or SA.

Generally speaking, when a transmission point (for example, a radio base station (eNB), a user terminal (UE) and so on) that communicates by using a carrier (which may also be referred to as a "carrier frequency," or simply a "frequency") of an unlicensed band detects another entity (for example, another UE) that is communicating in this unlicensed band carrier, the transmission point is disallowed to make transmission in this carrier.

So, the transmission point executes listening (LBT) at a timing that is a predetermined period ahead of a transmission timing. To be more specific, by executing LBT, the transmission point searches the whole applicable carrier band (for example, one component carrier (CC)) at a timing that is a predetermined period ahead of a transmission timing, and checks whether or not other devices (for example, radio base stations, UEs, Wi-Fi devices and so on) are communicating in this carrier band.

Note that, in the present description, "listening" refers to the operation which a given transmission point (for example, a radio base station, a user terminal, etc.) performs before transmitting signals in order to check whether or not signals to exceed a predetermined level (for example, predetermined power) are being transmitted from other transmission points. Also, this "listening" performed by radio base stations and/or user terminals may be referred to as "LBT," "CCA," "carrier sensing" and so on.

If it is confirmed that no other devices are communicating, the transmission point carries out transmission using this carrier. If the received power measured during LBT (the received signal power during the LBT period) is equal to or lower than a predetermined threshold, the transmission point judges that the channel is in the idle state ($LBT_{idle}$), and carries out transmission. When a "channel is in the idle state," this means that, in other words, the channel is not occupied by a specific system, and it is equally possible to say that a channel is "idle," a channel is "clear," a channel is "free," and so on.

On the other hand, if only just a portion of the target carrier band is detected to be used by another device, the transmission point stops its transmission. For example, if the transmission point detects that the received power of a signal from another device entering this band exceeds a predetermined threshold, the transmission point judges that the channel is in the busy state ($LBT_{busy}$), and makes no transmission. In the event $LBT_{busy}$ is yielded, LBT is carried out again with respect to this channel, and the channel becomes available for use only after it is confirmed that the channel is in the idle state. Note that the method of judging whether a channel is in the idle state/busy state based on LBT is by no means limited to this.

As LBT mechanisms (schemes), FBE (Frame Based Equipment) and LBE (Load Based Equipment) are currently under study. Differences between these include the frame configurations to use for transmission/receipt, the channel-occupying time, and so on. In FBE, the LBT-related transmitting/receiving configurations have fixed timings. Also, in LBE, the LBT-related transmitting/receiving configurations are not fixed in the time direction, and LBT is carried out on an as-needed basis.

To be more specific, FBE has a fixed frame cycle, and is a mechanism of carrying out transmission if the result of executing carrier sensing for a certain period (which may be referred to as "LBT time," "LBT duration" and so on) in a predetermined frame shows that a channel is available for use, and not making transmission but waiting until the next carrier sensing timing if no channel is available.

On the other hand, LBE refers to a mechanism for implementing the ECCA (Extended CCA) procedure of extending the duration of carrier sensing when the result of carrier sensing (initial CCA) shows that no channel is available for use, and continuing executing carrier sensing until a channel is available. In LBE, random backoff is required to adequately avoid contention.

Note that the duration of carrier sensing (also referred to as the "carrier sensing period") refers to the time (for example, the duration of one symbol) it takes to gain one LBT result by performing listening and/or other processes and deciding whether or not a channel can be used.

A transmission point can transmit a predetermined signal (for example, a channel reservation signal) based on the result of LBT. Here, the result of LBT refers to information about the state of channel availability (for example, "$LBT_{idle}$," "$LBT_{busy}$," etc.), which is acquired by LBT in carriers where LBT is configured.

As described above, by introducing interference control for use within the same frequency that is based on LBT mechanisms to transmission points in LAA systems, it is possible to prevent interference between LAA and Wi-Fi, interference between LAA systems and so on. Furthermore, even when transmission points are controlled independently per operator that runs an LAA system, it is possible to reduce interference without learning the details of each operator's control, by means of LBT.

Now, in LAA systems, to configure and/or reconfigure unlicensed band SCells (Secondary Cells) in UEs, a UE has to detect SCells that are present in the surroundings by means of RRM (Radio Resource Management) measurements, measure their received quality, and then send a report to the network. The signal to allow RRM measurements in LAA is under study based on the discovery reference signal (DRS) that is stipulated in Rel. 12.

Note that the signal for RRM measurements in LAA may be referred to as the "detection/measurement signal," the "discovery reference signal" (DRS), the "discovery signal" (DS), the "LAA DRS," the "LAA DS" and so on. Also, an unlicensed band SCell may be referred to as, for example, an LAA SCell.

Similar to Rel. 12 DS, the LAA DS may be constituted by a combination of synchronization signals (PSS (Primary Synchronization Signal)/SSS (Secondary Synchronization Signal)) and the CRS (Cell-specific Reference Signal) of existing systems (for example, LTE Rel. 10 to 12), a combination of synchronization signals (PSS/SSS), the CRS and the CSI-RS (Channel State Information Reference Signal) of existing systems, and so on.

Also, the network (for example, eNBs) can configure the DMTC (Discovery Measurement Timing Configuration) of the LAA DS in UEs per frequency. The DMTC contains information about the transmission cycle of the DS (which may be also referred to as "DMTC periodicity" and so on), the offset of DS measurement timings, and so on.

The DS is transmitted per DMTC periodicity, in the DMTC duration. Here, according to Rel. 12, the DMTC duration is fixed to 6 ms. Also, the length of the DS (which may be also referred to as the "DRS occasion," the "DS period" and so on) that is transmitted in the DMTC duration is between 1 ms and 5 ms. Studies are in progress to apply the same configurations to LAA.

A UE learns the timing and the cycle of the LAA DS measurement period based on the DMTC reported from the network, and executes LAA DS measurements.

Taking LBT into consideration, the following two LAA DS transmission control methods are currently under study. Similar to the Rel. 12 DS, the first method is a method of transmitting the DS in a fixed location (timing) in the DMTC duration (for example, a method of transmitting the PSS/SSS in the first subframe in the DMTC duration). With the first method, if a predetermined cell fails to transmit the DS at the above fixed timing due to LBT$_{busy}$, this cell cannot transmit the DS until the next DMTC periodicity.

The second method is a method of making the DS transmission location in the DMTC duration variable (for example, a method of enabling DS transmission in a plurality of candidate transmission locations). According to the second method, even when a predetermined cell fails to transmit a DS in the first candidate location due to LBT$_{busy}$, there is still a possibility that the DS can be transmitted in another candidate location within the same DMTC periodicity. In this case, each cell's DS receiving timing is different from the timing the UE would conventionally expect.

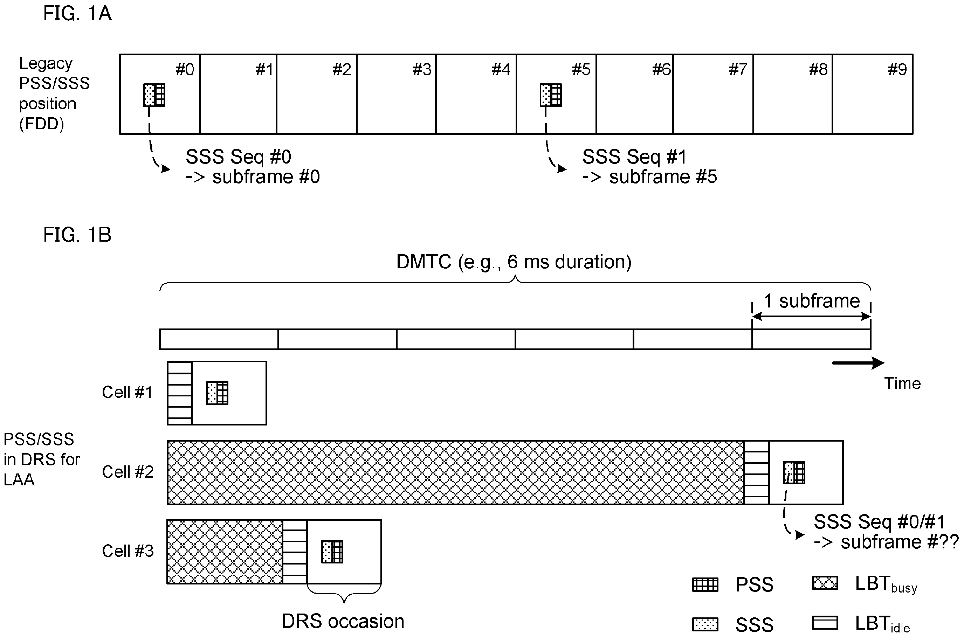

The present inventors have focused on the fact that, in LAA cells, the timing to receive the LAA DS is shifted when LBT is executed, and, in particular, focused on the problem that the timing to receive synchronization signals is shifted. Now, this problem will be described below in detail with reference to FIGs. 1.

FIGs. 1 provide diagrams to show examples of synchronization signals in an existing system and an LA system. FIG. 1A shows the locations of FDD PSS/SSS radio resources in an existing system. The PSS and the SSS are transmitted in subframes #0 and #5.

For example, in FDD, the PSS is transmitted in the last symbol (symbol #6) of the first slot in subframe #0 and subframe #5 (slots #0 and #10 in the radio frame). Also, the PSSs transmitted in these symbols are a common sequence.

Meanwhile, in FDD, for example, the SSS is transmitted in the symbol that is one symbol before the symbol in which the PSS is transmitted (symbol #5 of the first slot subframe #0 and subframe #5). Also, different sequences of SSSs are transmitted in subframe #0 and subframe #5. When an SSS is received, the UE can judge which sequence this is, identify the subframe in which this SSS is received (that is, identify the subframe index (subframe index)), and establish frame timing synchronization.

FIG. 1B is a diagram to show examples of the locations of PSS/SSS radio resources included in DSs (DRSs) in LAA. FIG. 1B shows the DSs which three cells (cells #1 to #3) transmit respectively in the DMTC duration (for example, 6 ms). Cell #1, having judged on LBT$_{idle}$ in the first subframe of the DMTC duration, transmits a DS, which includes the PSS/SSS, for the DRS occasion, in this subframe. Note that, although, in FIG. 1B, the DRS occasion is a period that is one subframe or less, this is by no means limiting, and the DRS occasion may be greater than one subframe.

Cell #2 and cell #3 each show an example of DS transmission when there is an LBT$_{busy}$ period. These cells each transmit a DS, which includes the PSS/SSS, when LBT$_{idle}$ is rendered after the LBT$_{busy}$ period.

That is, since the subframe to transmit the PSS/SSS changes depending on the result of LBT, a UE cannot judge which subframe an SSS that is received corresponds to, and therefore cannot establish frame timing synchronization. Consequently, it becomes difficult to perform ell search and/or RRM measurements in LAA accurately (with high reliability).

So, the present inventors have come up with the idea that, when a DS (LAA DS) is received in a carrier in which LBT is configured, it may be possible to make the synchronization signals included in the DS have a different signal configuration than the SSS of existing systems, so that, based on this signal configuration, the index of the subframe in which the synchronization signals are received (and/or transmitted) can be specified.

Now, embodiments of the present invention will be described in detail below with reference to the accompanying drawings. Although examples will be described with each embodiment below where CA is executed assuming that the PCell (Primary Cell) is a licensed band and an SCell is an unlicensed band, this is by no means limiting.

That is, embodiments of the present invention can be configured so that a structure to make a licensed band (and the PCell) a carrier where listening (LBT) is not configured (which may also be referred to as a carrier where LBT is not executed, a carrier where LBT cannot be executed, and so on), and make an unlicensed band (and an SCell) a carrier where listening (LBT) is configured (which may also be referred to as a carrier where LBT is executed, a carrier where LBT should be executed, and so on) can be used in each embodiment.

Also, the combination of carriers where LBT is not configured and carriers where LBT is configured, and PCells and Scells, is not limited to that given above. For example, the present invention is applicable to the case where a UE connects with an unlicensed band (a carrier where listening (LBT) is configured) in stand-alone.

(Radio communication method)

<First Embodiment>

The first embodiment of the present invention expands the SSS from the perspective of code resources (in a CDM (Code Division Multiplexing) manner). To be more specific, according to the first embodiment, the LAA DS SSS is generated by using different scrambling sequences than existing SSSs.

Existing SSSs (the SSSs of Rel. 8 to 12) have heretofore only supported two patterns of subframe index identifiers (subframe #0 or #5), in addition to 168 patterns of identifiers (IDs), by using two scrambling sequences of a sequence length of 31. So, with the first embodiment, the SSS scrambling sequence length is expanded, and the number of patterns that can be identified is expanded from $168 \times 2$ to a predetermined number (for example, $168 \times 10$), to allow linking with subframe indices (subframes #0 to #9).

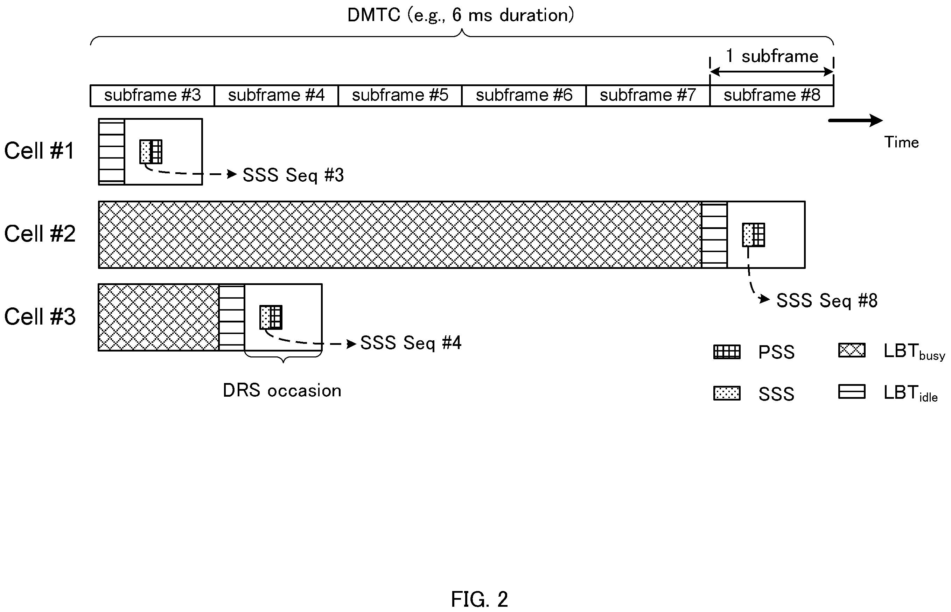

FIG. 2 is a diagram to explain the concept of the first embodiment. The diagram shown in FIG. 2 is the same as in FIG. 1B, except that, in each subframe, the SSS is constituted by a different sequence. To be more specific, the SSS of cell #1, transmitted in subframe #3, corresponds to sequences #3 (Seq #3). Also, the SSSs of cells #2 and #3, transmitted in subframes #8 and #4, respectively, correspond to sequences #8 and #4, respectively.

First, the rules for the design of existing SSSs will be described. Existing SSSs are generated by using length 31 sequences. The sequences are represented by equations 1:

$$d(2n) = \begin{cases} s_0^{(m_0)}(n)\, c_0(n) & \text{in subframe \#0} \\ s_1^{(m_1)}(n)\, c_0(n) & \text{in subframe \#5} \end{cases}$$

$$d(2n+1) = \begin{cases} s_1^{(m_1)}(n)\, c_1(n)\, z_1^{(m_0)}(n) & \text{in subframe \#0} \\ s_0^{(m_0)}(n)\, c_1(n)\, z_1^{(m_1)}(n) & \text{in subframe \#5} \end{cases} \qquad \dots \text{(Equations 1)}$$

where n denotes the subcarrier (0 to 61), and $s_0^{(m_0)}(n)$, $s_1^{(m_1)}(n)$, $z_0^{(m_0)}(n)$ and $z_1^{(m_1)}(n)$ denote the cyclic shifts (scrambling codes) applied to the sequences. Also, $c_0(n)$ and $c_1(n)$ are scrambling codes that relate to parameters that can be specified based on the PSS (part of the cell ID).

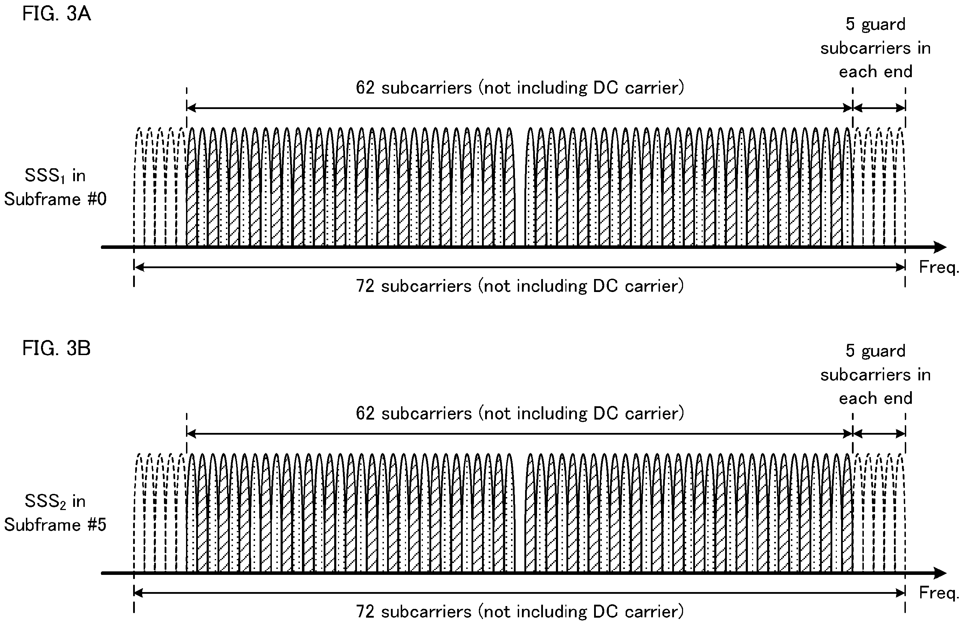

FIGs. 3 provide diagram to show subcarriers where existing SSSs are mapped. FIG. 3A shows the SSS that is transmitted in subframe #0 ($SSS_1$), and FIG. 3B shows the SSS that is transmitted in subframe #5 ($SSS_2$). As shown in equations 1, the sequence of each subcarrier (even-numbered subcarrier and odd-numbered subcarrier) is generated based on $m_0$ or $m_1$, so that, when an SSS is received, a UE can judge whether its mapping shows $SSS_1$ or $SSS_2$, and specify subframe #0 or #5.

Note that, in existing SSSs, as shown in FIGs. 3, sequences having a length of 31, corresponding to $m_0$ and $m_1$, are arranged over 62 subcarriers, not including the subcarrier at the center of the band (DC (Direct Current) subcarrier), and, non-transmission subcarriers (guard subcarriers) that are five subcarriers wide are arranged at both ends of these. By this means, the SSSs can be mapped to six PRBs (Physical Resource Blocks) (= 72 subcarriers) of frequency resources.

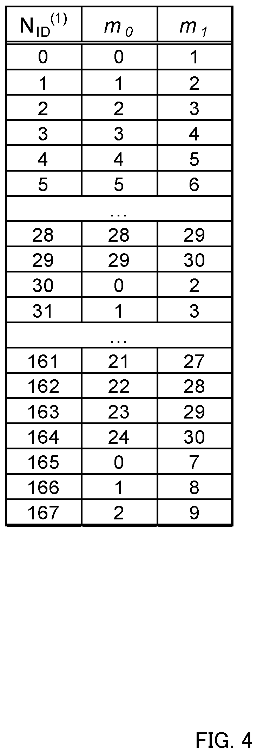

FIG. 4 is a diagram to show the corresponding relationships among ($m_0$, $m_1$) and $N_{ID}^{(1)}$ in existing SSSs (mapping table). A s shown in FIG. 4, by representing $m_0$ and $m_1$ by using a sequence of a length of 31, $N_{ID}^{(1)}$ can be represented in 168 patterns. Given that $_{31}C_2 > 168$, a sequence of a length of 31 is sufficient for $N_{ID}^{(1)}$.

According to the first embodiment, LAA SCell cell search is conducted by the UE as follows. First, the PSS is detected in the DMTC duration. Next, an attempt to detect the SSS scrambling sequence is made within the DMTC duration, and, based on the SSS that is detected, the subframe index M (M = 0 to 9), in which the LAA DS SSS has been transmitted (or which is linked with the SSS), is specified.

According to the first embodiment, an eNB generates the LAA DS SSS by using sequences of a length of 42. These sequences are represented by, for example, equations 2:

$$d(2n) = \begin{cases} s_0^{(m_0)}(n)\, c_0(n) & \text{in subframe \#0-\#4} \\ s_1^{(m_1)}(n)\, c_0(n) & \text{in subframe \#5-\#9} \end{cases}$$

$$d(2n+1) = \begin{cases} s_1^{(m_1)}(n)\, c_1(n)\, z_1^{(m_0)}(n) & \text{in subframe \#0-\#4} \\ s_0^{(m_0)}(n)\, c_1(n)\, z_1^{(m_1)}(n) & \text{in subframe \#5-\#9} \end{cases} \qquad \ldots \text{(Equations 2)}$$

where n denotes the subcarrier (0 to 83). Also, $s_0^{(m_0)}(n)$, $s_1^{(m_1)}(n)$, $c_0(n)$, $c_1(n)$, $z_0^{(m_0)}(n)$ and $z_1^{(m_1)}(n)$ denote parameters that are given by modifying these parameters of existing SSSs taking into account the change of the sequence length from 31 to 42.

When the timing to transmit the SSS in the LAA SCell shifts due to execution of LBT, the values of $m_0$ and $m_1$ and the subcarrier mapping of the SSS are determined based on the subframe in which the SSS is transmitted.

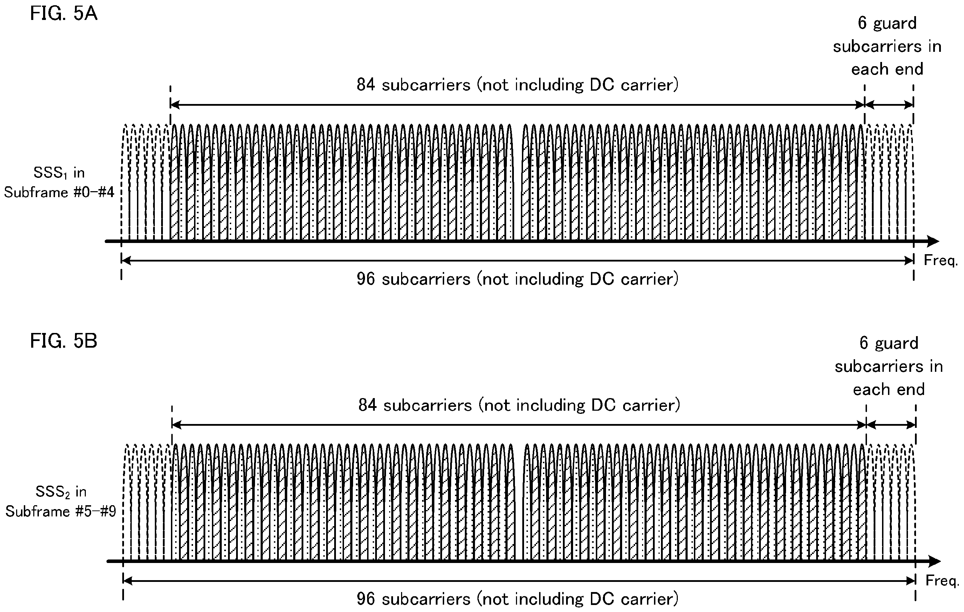

FIGs. 5 provide diagrams to show subcarriers where SSSs according to the first embodiment are mapped. FIG. 5A shows the SSS ($SSS_1$) to be transmitted in subframes #0 to #4, and FIG. 5B shows the SSS ($SSS_2$) to be transmitted in subframes #5 to #9. As shown in equations 2, the sequence of each subcarrier (even-numbered subcarrier and odd-numbered subcarrier) is generated based on $m_0$ or $m_1$, so that so that, when an SSS is received, the UE can judge whether its mapping shows $SSS_1$ or $SSS_2$, and specify the subframe among subframes #0 to #4 or subframes #5 to #9.

Note that, in the SSS according to the first embodiment, as shown in FIGs. 5, sequences having a length of 42, corresponding to $m_0$ and $m_1$, are arranged over 84 subcarriers, not including the DC subcarrier, and, guard subcarriers that are six subcarriers wide are arranged at both ends of these. By this means, the SSS can be mapped to eight PRBs (= 96 subcarriers) of frequency resources.

Also, the SSS according to the first embodiment is transmitted in relatively the same symbol period as that used for existing SSSs. For example, the SSS according to the first embodiment is transmitted in the symbol that is one symbol before the symbol in which the PSS is transmitted. Note that the symbol to transmit the SSS is by no means limited to this.

According to the first embodiment, the UE determines the index M (M = 0 to 9) of the subframe in which the LAA DS SSS is transmitted, based on, for example, following equation 3:

$$M = N + a \times 5 \qquad \ldots \text{(Equation 3)}$$

where N is a variable to represent the index of a candidate subframe (indices #0 to #4 of a half radio frame (0. 5 radio frame)). Also, a is a variable to represent the subcarrier mapping pattern, and, for example, a = 0 can be used when the UE detects the mapping pattern ($m_0$, $m_1$) of FIG. 5A (when the UE judges that d(2n) and d(2n + 1) are based on $m_0$ and $m_1$, respectively), or a = 1 can be used when the UE detects the mapping pattern ($m_1$, $m_0$) of FIG. 5B.

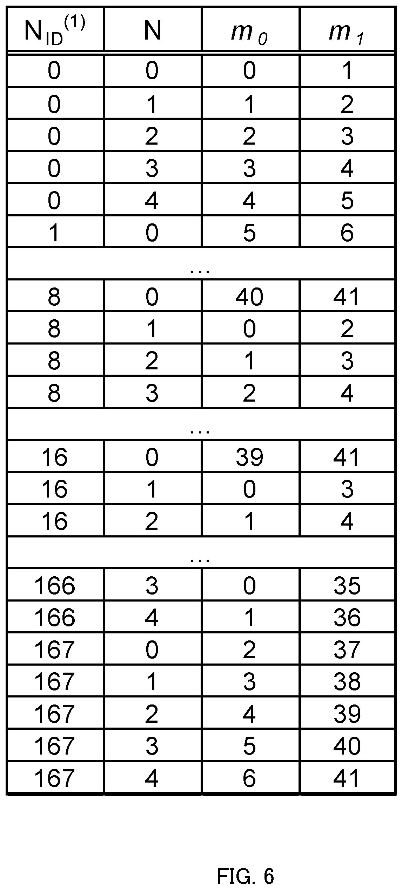

FIG. 6 is a diagram to show examples of corresponding relationship between ($m_0$, $m_1$), $N_{ID}^{(1)}$ and N in the SSS according to the first embodiment (mapping table). As shown in FIG. 6, by representing $m_0$ and $m_1$ by using 42 sequences, it is possible to provide $N_{ID}^{(1)}$ in 168 patterns and provide N in five patterns. That is, the SSS of the first embodiment is generated by using sequences that are linked with SSS transmission timings. Note that, given that $_{42}C_2 > 168 \times 5$, a sufficient number of sequences are provided to represent N while maintaining the functions of existing SSSs. Note that the linking of ($m_0$, $m_1$), $N_{ID}^{(1)}$ and N is by no means limited to what is shown in FIG. 6.

As described above, according to the first embodiment, an SSS having an extended sequence length compared to existing SSSs is used as the SSS for the LAA DS, so that a UE can specify the indices of subframes where these SSSs are allocated, and establish frame timing synchronization. Also, since the LAA DS SSS can be arranged in the same central frequency and the same symbol period as those for an existing SSS, it is possible to reduce the increase of processing load pertaining to synchronization in the UE.

<Second Embodiment>

A second embodiment of the present invention extends the SSS from the perspective of time and/or frequency resources (in TDM (Time Division Multiplexing) and/or FDM (Frequency Division Multiplexing) manner). To be more specific, with the second embodiment, a plurality of candidate time/frequency resources for transmitting the SSS (also referred to as "candidate radio resources," "candidate resources," "subcarrier clusters" and so on) are configured, and the subframe index where the SSS has been transmitted is identified based on the resource that has actually been used to transmit the SSS. That is, the candidate SSS resources are linked with SSS transmission timings (transmission subframes).

Existing SSSs have only supported one radio resource configuration per cell (that is, the SSS has heretofore been transmitted in a fixed symbol location and frequency resource). So, with the second embodiment, the number of LAA DS SSS resource configurations is expanded from one to, for example, five, to allow linking with subframe indices (subframes #0 to #9).

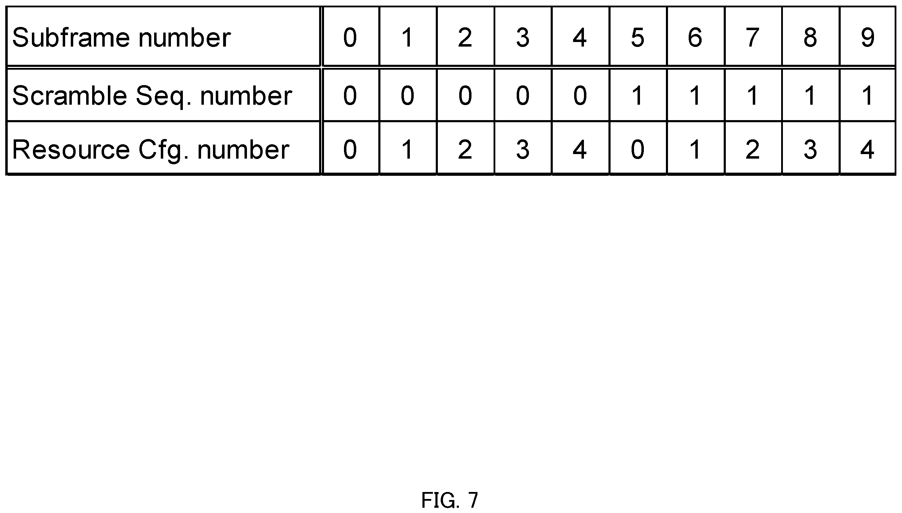

FIG. 7 is a diagram to show examples of corresponding relationships among the subframe index, the scrambling sequence and the resource configuration according to the second embodiment. In FIG. 7, the SSS scrambling sequences correspond to the two sequences (Seq. #0 and #1) of existing SSSs, which have been described earlier with the first embodiment. In this case, the sequence indices to represent these sequences assume the values of, for example, 0 and 1.

Also, in FIG. 7, five patterns of candidate SSS resource configurations are provided (Cfg. #0 to #4), and correspond to varying radio resources. For example, by making Cfg. #0 the same time/frequency resource configuration as for existing SSSs, the SSSs of subframe #0 and subframe #5 can be configured to use the same sequences and RE (Resource Element) locations as those of existing SSSs. In this case, the resource configuration indices to indicate the resources where the SSSs are arranged can have the values of, for example, 0 to 4.

According to the second embodiment, a UE determines the subframe index M (M = 0 to 9) where LAA DS SSS is transmitted based on, for example, following equation 4:

$$M = \text{resource configuration index} + \text{sequence index} \times 5$$

(Equation 4)

Note that the second embodiment is by no means limited to the corresponding relationships of FIG. 7. For example, when only one SSS sequences is used, it may be possible to link the SSS with subframes #0 to #9 by providing ten or more candidate SSS resource configurations.

<Embodiment 2.1>

One method (embodiment 2.1) of implementing the second embodiment of the present invention is to transmit the LAA DS SSS in one of a plurality of candidate resources that include candidate resources given by shifting an existing SSS in the frequency direction.

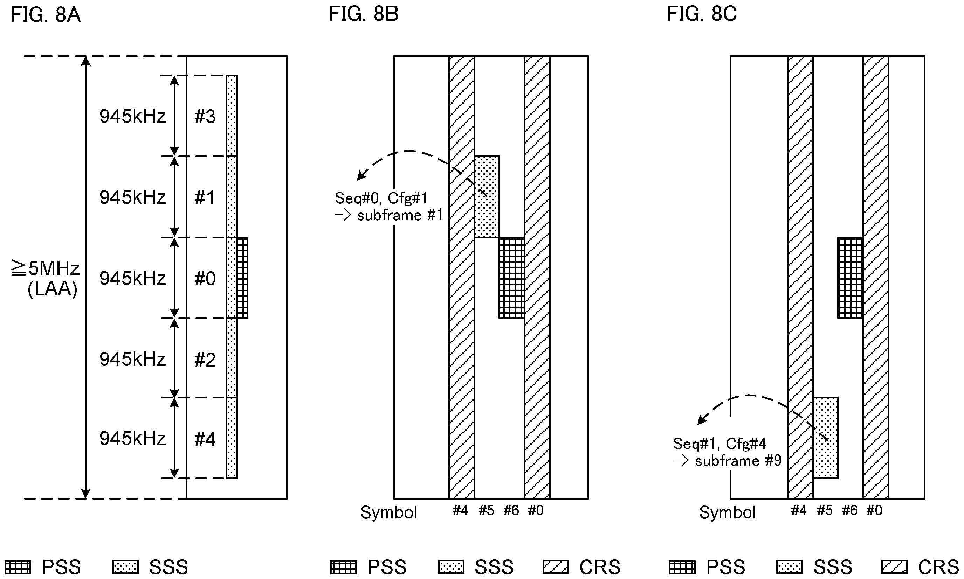

FIGs. 8 provide diagrams to show examples of SSSs according to embodiment 2.1. FIG. 8A is a diagram to show examples of candidate SSS resources according to embodiment 2.1, and FIGs. 8B and 8C are diagrams, each showing an example of a DS that is transmitted in a DRS occasion.

In FIG. 8A, candidate resource configuration #0 represents the same resource as for an existing SSS. Also, candidate resource configurations #1 to #4 represent resources that are given by candidate resource configuration #0 in the frequency direction. Note that the arrangement and order of candidate resource configurations #0 to #4 are by no means limited to the examples of FIG. 8A. In this way, according to embodiment 2.1, it is preferable to configure a plurality of candidate resources in a symbol (symbol #5 of the first slot in a subframe) having the same symbol index as one for an existing SSS, this is by no means limiting.

Note that, if each candidate resource is constituted by six PRBs (= 72 subcarriers = 1080 kHz) like an existing SSS, at least 5.4 MHz (five candidate resources) is required for the LAA SCell band. However, given that a study is in progress to make the LAA band minimum 5 MHz, it is preferable to make the band for one candidate resource 1 MHz or less.

So, with embodiment 2.1, it is possible to configure a predetermined candidate resource so that part of the subcarriers, including the guard carriers, overlaps at least one different candidate resource. For example, it is preferable to arrange a predetermined candidate resource so that the subcarrier in which the SSS is actually transmitted (or in which the SSS sequence is mapped) adjoins a subcarrier in which the SSS can be transmitted using another candidate resource. In this case, each candidate resource is constituted by 62 subcarriers where the sequence is actually arranged. Note that, in other embodiments, too, the SSS frequency resource with may be determined like this.

In an DRS occasion, the UE tries to receive the LAA DS SSS in candidate resource configurations #0 to #4 of FIG. 8A. For example, when the DS of FIG. 8B is transmitted, the UE detects the SSS that corresponds to sequence #0 and configuration #1, and identifies subframe index = 1 based on equation 4. When the DS of FIG. 8C is transmitted, the UE detects the SSS that corresponds to sequence #1 and configuration #4, and identifies subframe index = 9 based on equation 4.

Note that FIGs. 8 show examples in which CRSs are transmitted in symbol #4 of the first slot and symbol #0 of the second slot. Also, the transmission of the DS starts from a symbol other than symbol #0. However, this signal configuration is by no means limiting.

As described above, according to embodiment 2.1, the LAA DS SSS is transmitted in one of a plurality of candidate resources, so that a UE can specify the index of the subframe where the SSS is allocated, and establish frame timing synchronization. Also, since the LAA DS SSS can be arranged in the same symbol period as one for an existing SSS, it is possible to reduce the expansion of DRS occasions.

<Embodiment 2.2>

In another method of implementing the second embodiment of the present invention (embodiment 2.2), the LAA DS SSS is transmitted using one of a plurality of candidate resources including candidate resources that are given by shifting an existing SSS in the time direction.

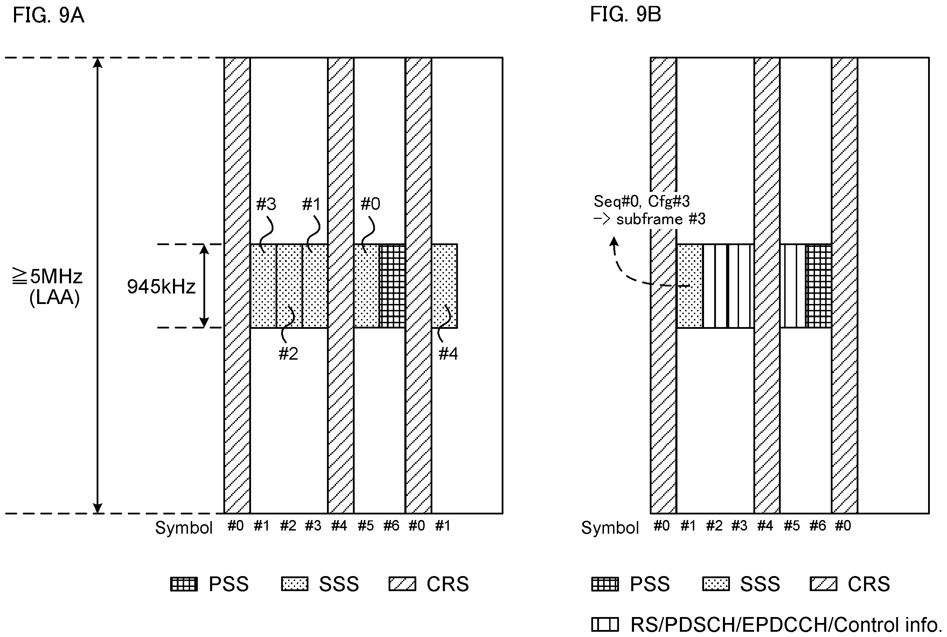

FIGs. 9 provide diagrams to show examples of SSSs according to embodiment 2.2. FIG. 9A is a diagram to show examples of candidate SSS resources according to embodiment 2.2, and FIG. 9B is a diagram to show an example of a DS that is transmitted in a DRS occasion.

In FIG. 9A, candidate resource configuration #0 represents the same resource as one for an existing SSS. Also, candidate resource configurations #1 to #4 represent resources that are given by candidate resource configuration #0 in the frequency direction. For example, a plurality of candidate resources may be mapped to symbols #1, #2, #3 and #5 of the first slot in a subframe and to symbol #1 of the second slot. Note that the arrangement and order of candidate resource configurations #0 to #4 are by no means limited to the examples of FIG. 9A. In this way, according to embodiment 2.2, it is preferable to configure a plurality of candidate resources in the same subcarriers (frequency locations) as ones for an existing SSS, this is by no means limiting.

In an DRS occasion, the UE tries to receive the LAA DS SSS in candidate resource configurations #0 to #4 of FIG. 9A. For example, when the DS of FIG. 9B is transmitted, the UE detects the SSS that corresponds to sequence #0 and configuration #3, and identifies subframe index = 3 based on equation 4.

Although, according to embodiment 2.2, the SSS can be transmitted using one of a plurality of time resources (symbols) in a DRS occasion, if there is a symbol in which the SSS is not transmitted and in which an eNB transmits nothing, then there is a possibility that another system's LBT succeeds. In this case, the right to use the channel is taken away, and there is a threat that the eNB is unable to transmit the SSS, and the UE takes a longer time to establish synchronization becomes longer, fails RRM measurements, and so on.

Consequently, when there is a possibility that the SSS is transmitted in one of a plurality of candidate resources (symbols), it is preferable to control an eNB to transmit predetermined signals in candidate resources (symbols) in which the eNB does not transmit the SSS.

In FIG. 9B, for example, in blank candidate resources, reference signals (RSs) (such as the cell-specific reference signal (CRS), the channel state information reference signal (CSI-RS), the demodulation reference signal (DMRS) and so on), a downlink shared channel (PDSCH (Physical Downlink Shared Channel)), a downlink L1/L2 control channel (for example, the EPDCCH (Enhanced Physical Downlink Control Channel)), or other control information (for example, broadcast information (MIBs (Master Information Blocks), SIBs (System Information Block) and so on)), or combinations of these, are transmitted. Note that the signals that are transmitted in blank candidate resources are not limited to these, and, for example, signals for occupying channels such as dummy signals may be used as well.

Note that FIGs. 9 show examples in which CRSs are transmitted in symbol #0 and symbol #4 of the first slot and symbol #0 of the second slot. Also, the transmission of the DS is started from symbol #0. However, this signal configuration is by no means limiting.

As described above, according to embodiment 2.2, the LAA DS SSS is transmitted in one of a plurality of candidate resources, so that a UE can specify the index of the subframe where the SSS is allocated, and establish frame timing synchronization. Also, since the LAA DS SSS can be arranged in a frequency resource that is less than six PRBs, it is possible to reduce the increase of processing load pertaining to synchronization in the UE.

<Embodiment 2.3>

In yet another method of implementing the second embodiment of the present invention (embodiment 2.3), the LAA DS SSS is transmitted using one of a plurality of candidate resources including candidate resources that are given by shifting an existing SSS in the time and/or frequency directions.

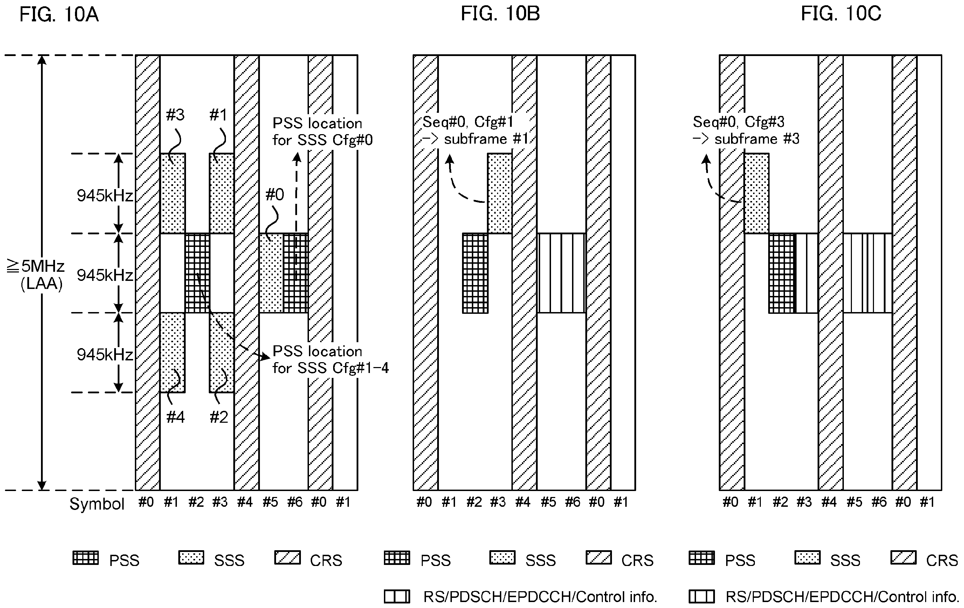

According to embodiment 2.3, for candidate SSS resources, the PSS may be transmitted in different radio resources than the existing PSS. FIGs. 10 provide diagrams to show examples of SSSs according to embodiment 2.3. FIG. 10A is a diagram to show examples of candidate SSS resources according to embodiment 2.3, and FIG. 10B and FIG. 10C are diagrams to show an example of a DS that is transmitted in a DRS occasion.

In FIG. 10A, a PSS for candidate SSS resource configuration #0 and a PSS for candidate SSS resource configurations #1 to #4 are set forth. Candidate SSS resource configuration #0 is the same resource (six PRBs and symbol #5) as one for an existing SSS, and the PSS for this configuration #0 is the same resource (six PRBs and symbol #6) as that of the existing PSS. It is thus preferable, with embodiment 2.3, to configure one candidate resource in the same resource as one for an existing SSS, but this is by no means limiting.

Also, the PSS for candidate SSS resource configurations #1 to #4 is transmitted in the same subcarrier location as that of the existing PSS, but in a different symbol (symbol #3). Furthermore, candidate SSS resource configurations #1 to #4 represent resources that are each given by shifting candidate resource configuration #0 in the time and frequency directions.

Here, it is preferable to place each candidate SSS resource as close as possible to the relative location of either PSS. For example, a plurality of candidate resources may be mapped to symbols #1 and #3 of the first slot in a subframe, to be as close as possible to the PSS for configuration #1 to #4 (so that, for example, the PSS and at least part of the frequency and/or time resource adjoin each other). Note that the arrangement and/or the order of candidate resource configurations #0 to #4 and the PSS resources are by no means limited to the examples of FIG. 10A.

In a DRS occasion, the UE tries to receive either one of the PSSs shown in FIG. 10A. Also, the UE tries to receive the LAA DS SSS in candidate resource configurations #0 to #4. For example, when the DS of FIG. 10B is transmitted, the UE detects the SSS that corresponds to sequence #0 and configuration #1, and identifies subframe index = 1 based on equation 4. Also, when the DS of FIG. 10C is transmitted, the UE detects the SSS that corresponds to sequence #0 and configuration #3, and identifies subframe index = 3 based on equation 4.

With embodiment 2.3, too, it is preferable to control an eNB to transmit predetermined signals in candidate resources (symbols) in which the eNB does not transmit the SSS. Also, it is equally possible to control the eNB to transmit predetermined signals in time resources (symbols) in which the eNB does not transmit either PSS.

Note that FIGs. 10 show examples in which CRSs are transmitted in symbol #4 of the first slot and symbol #0 of the second slot. Also, the transmission of the DS is started from symbol #0. However, this signal configuration is by no means limiting.

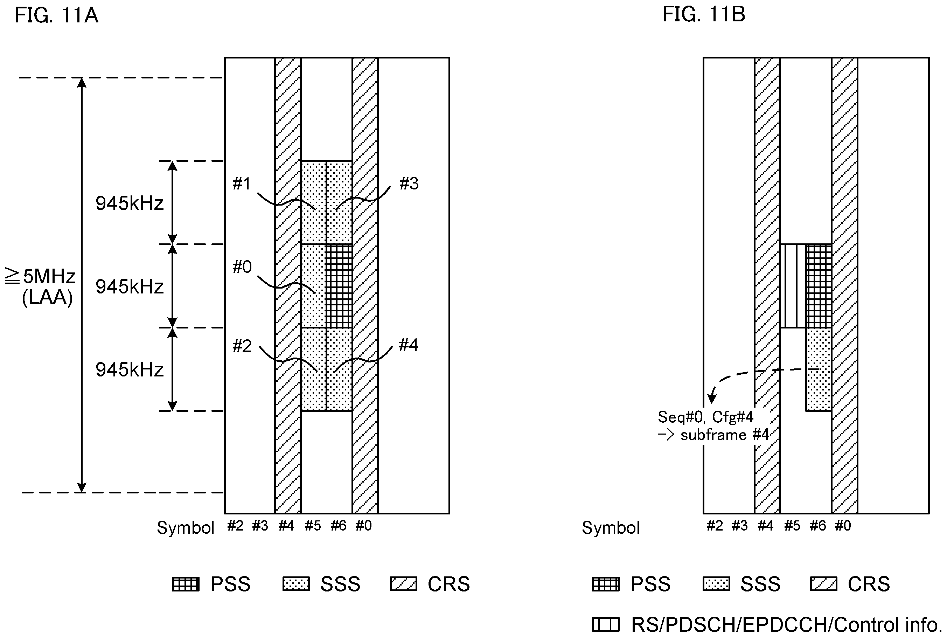

Also, according to embodiment 2.3, the SSS may be transmitted in the same time resource (symbol) as that of the PSS. FIGs. 11 provide diagrams to show other examples of SSSs according to embodiment 2.3. FIG. 11A is a diagram to show examples of candidate SSS resources according to embodiment 2.3, and FIG. 11B is a diagram to show an example of a DS that is transmitted in a DRS occasion.

In FIG. 11A, candidate SSS resource configuration #0 is the same resource (six PRBs and symbol #5) as one for an existing SSS, and the PSS is the same resource (six PRBs and symbol #6) as one for the existing PSS.

Also, candidate resource configuration #1 and #2 are resources that are given by shifting an existing SSS in the frequency direction. Also, candidate resource configuration #3 and #4 are resources that adjoin the PSS in the frequency domain in the same symbol as one for the existing PSS. Note that the arrangement and/or the order of candidate resource configurations #0 to #4 and the PSS resources are by no means limited to the examples of FIG. 11A.

In a DRS occasion, the UE tries to receive the LAA DS SSS in candidate resource configurations #0 to #4. For example, when the DS of FIG. 11B is transmitted, the UE detects the SSS that corresponds to sequence #0 and configuration #4, and identifies subframe index = 4 based on equation 4.

Also, in the example of FIG. 11, too, as has been described with embodiment 2.2, it is preferable to control an eNB to transmit predetermined signals in candidate resources (symbols) in which the eNB does not transmit the SSS.

Note that FIGs. 11 show examples in which CRSs are transmitted in symbol #4 of the first slot and symbol #0 of the second slot. Also, the transmission of the DS is started from symbol #2. However, this signal configuration is by no means limiting.

As described above, according to embodiment 2.3, the LAA DS SSS is transmitted in one of a plurality of candidate resources, so that a UE can specify the index of the subframe where the SSS is allocated, and establish frame timing synchronization. Also, by employing a configuration to transmit the PSS in different symbols than the existing PSS, it is possible to prevent signals from being transmitted between the SSS and the PSS, and leading to failure of DS transmission (and DS-based synchronization/RRM measurements). Also, by employing a configuration to transmit the SSS in the same symbol as one for the existing PSS, it is possible to reduce the expansion of DRS occasions.

<Third Embodiment>

According to a third embodiment of the present invention, another signal that is for use for specifying the subframe index of an existing SSS is transmitted. In this case, the configurations of the existing PSS/SSS are maintained as-is, and a UE judges the subframe index based on this another signal and the SSS. Here, this new signal may be referred to as a synchronization signal, and also referred to as, for example, an "eSSS" (enhanced SSS), an "additional SSS," a "new SSS," an "LAA SSS," a "DRS SSS," a "DS SSS," the "Rel. 13 SSS," and so on. Note that these names may be applied to the SSS of the first embodiment and/or the SSS of the second embodiment.

According to the third embodiment, a UE determines the index M (M = 0 to 9) of the subframe in which the LAA DS SSS is transmitted, based on, for example, above equation 3. The eSSS may be generated based on the same or a similar sequence generation method as for existing SSSs, as long as the eSSS is a signal that can be used to specify variable N, which represents the candidate subframe index, in equation 3. Note that subframe index M may be referred to as the subframe index where the LAA DS eSSS is transmitted.

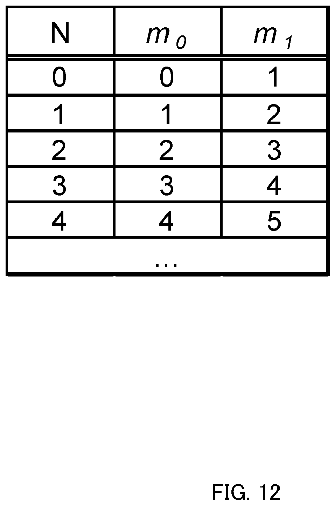

FIG. 12 is a diagram to show examples of corresponding relationship among $(m_0, m_1)$ and N in the eSSS according to the third embodiment (mapping table). As shown in FIG. 12, the eSSS may be generated by using, for example, sequences having a sequence length of 4, as long as N can be represented in five patterns. Note that, the linking of $(m_0, m_1)$ and N is not limited what is shown in FIG. 12. Also, information other than N may be linked with the eSSS sequence and/or resource (frequency/time resource).

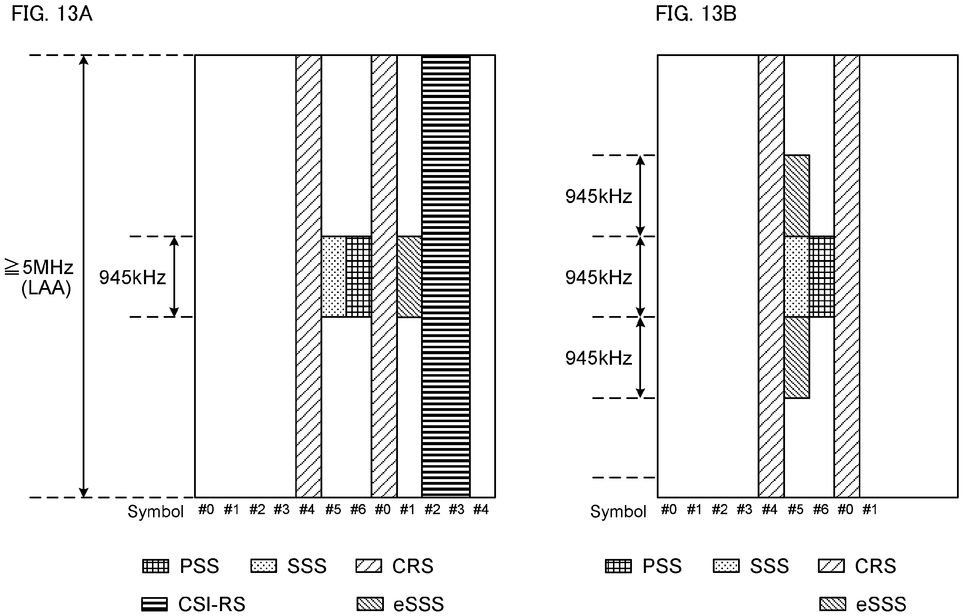

FIGs. 13 provide diagrams to show examples of eSSSs according to the third embodiment. FIG. 13A is a diagram to show an example in which an eSSS is mapped to a blank symbol (symbol in which no other signals are transmitted). In FIG. 13A, an eSSS is mapped to symbol #1 of the second slot in a subframe.

Also, FIG. 13B is a diagram to show an example in which eSSSs are mapped to blank REs (for example, REs in a symbol in which other signals (for example, an SSS) are transmitted). In FIG. 13B, in symbol #5 of the first in a subframe, an eSSS is mapped to either frequency portion adjoining the SSS.

Note that the arrangement and order of eSSSs is not limited to the examples shown in FIG. 13A. Also, FIGs. 13 show examples in which CRSs are transmitted in symbol #4 of the first slot and symbol #0 of the second slot. Also, the transmission of the DS is started from symbol #0. Furthermore, FIG. 13A shows an example in which the CSI-RS is transmitted after symbol #0, in the second slot of a subframe. However, this signal configuration is by no means limiting.

That is, the LAA DS of the third embodiment may be configured to include at least a PSS, an SSS, an eSSS and a CRS, and may be configured to include, furthermore, a CSI-RS.

As described above, according to the third embodiment, an eSSS is transmitted in order to specify the subframe index of the LAA DS SSS, so that a UE can specify the subframe index where the SSS is allocated, and establish frame timing synchronization. By employing this configuration, it is possible to maintain the existing PSS/SSS configurations, so that it is possible to reduce the increase of processing load pertaining to synchronization in UEs.

<Variation>

Each embodiment that has been described above may be used when, for example, a PCell and an SCell are not synchronized (for example, when the distance from a UE to a radio base station forming an unlicensed band SCell is different from the distance from the UE to a radio base station forming a licensed band PCell).

So, when, for example, PCell is synchronized with SCell, an SSS that is received in an LAA SCell can be ignored. That is, in an LAA SCell, the subframe index in which the SSS of this cell is transmitted does not have to be derived based on this SCell's signals. In this case, a configuration to acquire the above subframe index by detecting the PSS/SSS in the PCell may be employed. Also, in this case, a cell list (for example, a list of cell IDs) may be reported so as to know whether or not an SCell which the user terminal detects is a cell that is synchronized with the connecting PCell.

Also, information about the sequence of the LAA DS SSS and/or eSSS, subcarrier mapping of the SSS and/or eSSS, the frequency/time resource (candidate resources) of the SSS and/or eSSS, the corresponding relationship between the SSS and/or eSSS with the subframe index and so on may be reported to UEs by using one of higher layer signaling (for example, RRC (Radio Resource Control) signaling, broadcast information (MIBs and SIBs) and so on) and downlink control information (DCI), or by using a combination of these.

Note that the radio communication methods of the above-described embodiments may be applied individually or may be applied in combination.

(Radio Communication System)

Now, the structure of the radio communication system according to an embodiment of the present invention will be described below. In this radio communication system, the radio communication method according to one and/or a combination of the above-described embodiments of the present invention is employed.

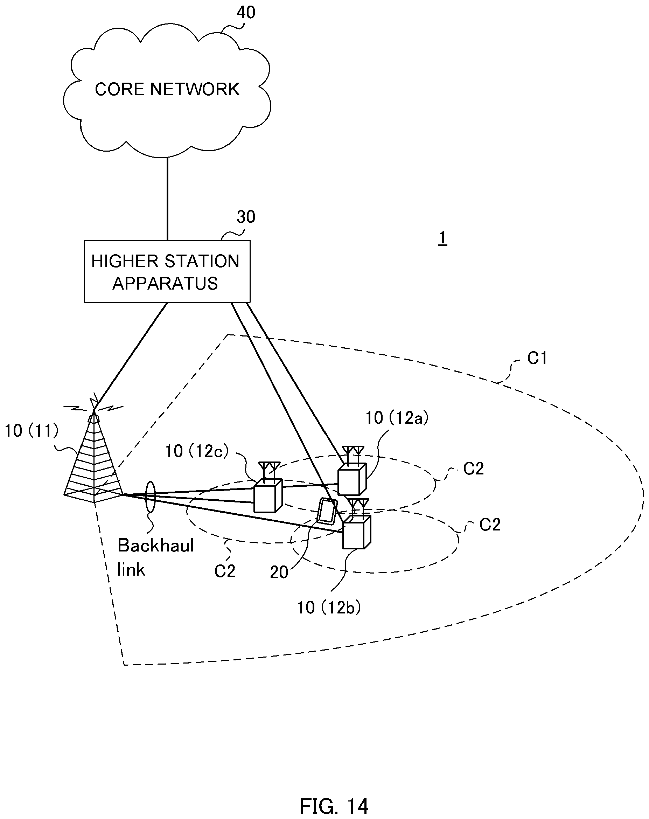

FIG. 14 is a diagram to show an example of a schematic structure of a radio communication system according to an embodiment of the present invention. The radio communication system 1 can adopt carrier aggregation (CA) and/or adopt dual connectivity (DC) to group a plurality of fundamental frequency blocks (component carriers) into one, where the LTE system bandwidth constitutes one unit. Also, the radio communication system 1 has a radio base station (for example, an LTE-U base station) that is capable of using unlicensed bands.

Note that the radio communication system 1 may be referred to as "SUPER 3G," "LTE-A," (LTE-Advanced), "IMT-Advanced," "4G" (4th generation mobile communication system), "5G" (5th generation mobile communication system), "FRA" (Future Radio Access) and so on.

The radio communication system 1 shown in FIG. 8 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2. For example, a mode may be possible in which the macro cell C1 is used in a licensed band and the small cells C2 are used in unlicensed bands (LTE-U). Also, a mode may be also possible in which part of the small cells is used in a licensed band and the rest of the small cells are used in unlicensed bands.

The user terminals 20 can connect with both the radio base station 11 and the radio base stations 12. The user terminals 20 may use the macro cell C1 and the small cells C2, which use different frequencies, at the same time, by means of CA or DC. For example, it is possible to transmit assist information (for example, the DL signal configuration) related to a radio base station 12 (which is, for example, an LTE-U base station) that uses an unlicensed band, from the radio base station 11 that uses a licensed band to the user terminals 20. Here, a structure may be employed in which, when CA is used between the licensed band and the unlicensed band, one of the radio base stations (for example, the radio base station 11) controls the scheduling of the licensed band cells and the unlicensed band cells.

Note that it is equally possible to use a structure in which a user terminal 20 connects with a radio base station 12, without connecting with the radio base station 11. For example, it is possible to use a structure in which a radio base station 12 that uses an unlicensed band connects with the user terminals 20 in stand-alone. In this case, the radio base station 12 controls the scheduling of unlicensed band cells.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise. Also, it is preferable to configure radio base stations 10 that use the same unlicensed band on a shared basis to be synchronized in time.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, MIBs (Master Information Blocks) are communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels.

The PUSCH may be referred to as an uplink data channel. User data and higher layer control information are communicated by the PUSCH. Also, downlink radio quality information (CQI: Channel Quality Indicator), delivery acknowledgment information (ACKs/NACKs) and so on are communicated by the PUCCH. By means of the PRACH, random access preambles for establishing connections with cells are communicated.

In the radio communication systems 1, cell-specific reference signals (CRSs), channel state information reference signals (CSI-RSs), demodulation reference signal (DMRSs) and so on are communicated as downlink reference signals. Also, in the radio communication system 1, measurement reference signals (SRSs: Sounding Reference Signals), demodulation reference signals (DMRSs) and so on are communicated as uplink reference signals. Note that, the DMRSs may be referred to as user terminal-specific reference signals (UE-specific Reference Signals). Also, the reference signals to be communicated are by no means limited to these.

(Radio base station)

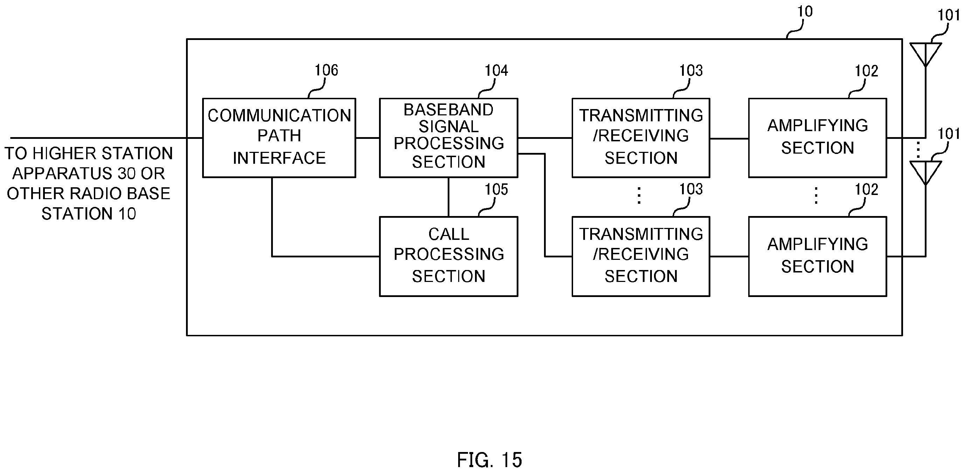

FIG. 15 is a diagram to show an example of an overall structure of a radio base station according to an embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals subjected to frequency conversion in the transmitting/receiving sections 103 are amplified in the amplifying sections 102, and transmitted from the transmitting/receiving antennas 101.

The transmitting/receiving sections 103 are capable of transmitting/receiving UL/DL signals in unlicensed bands. Note that the transmitting/receiving sections 103 may be capable of transmitting/receiving UL/DL signals in licensed bands as well. The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (for example, an interface in compliance with the CPRI (Common Public Radio Interface)m such as optical fiber, the X2 interface).

Note that the transmitting/receiving sections 103 transmit downlink signals to the user terminal 20 by using at least an unlicensed band. For example, the transmitting/receiving sections 103 transmit a DS, which includes an SSS that is different from an existing SSS, to the user terminals 20, in an unlicensed band, in a DMTC duration that is configured in the user terminals 20. Also, the transmitting/receiving sections 103 may transmit the existing PSS/SSS in a licensed band and/or an unlicensed band.

Also, the transmitting/receiving sections 103 receive uplink signals from the user terminals 20 by at least using an unlicensed band. The transmitting/receiving sections 103 may receive DS RRM measurement results (for example, CSI feedback and/or the like), from the user terminals 20, in a licensed band and/or an unlicensed band.

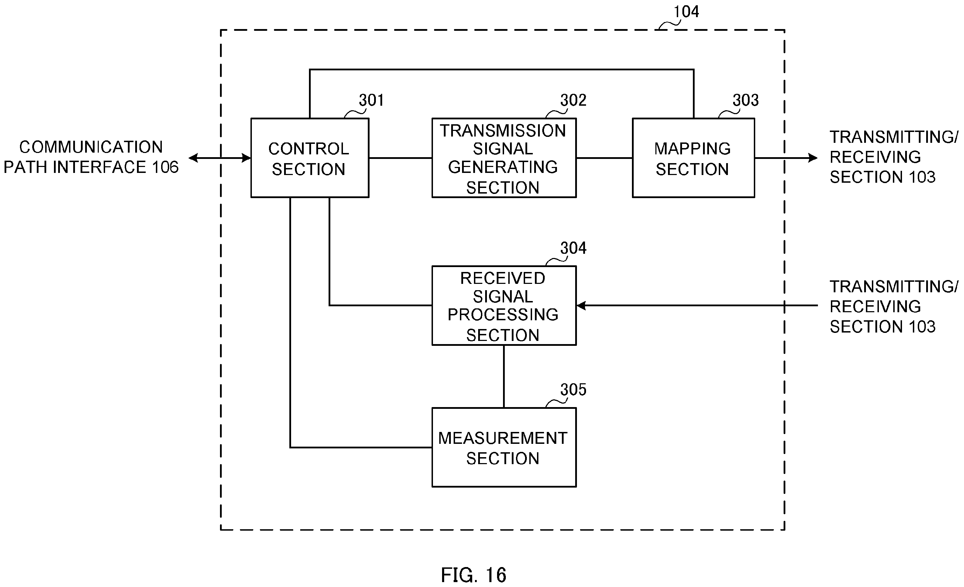

FIG. 16 is a diagram to show an example of a functional structure of a radio base station according to one embodiment of the present invention. Note that, although FIG. 10 primarily shows functional blocks that pertain to characteristic parts of the present embodiment, the radio base station 10 has other functional blocks that are necessary for radio communication as well. As shown in FIG. 16, the baseband signal processing section 104 has a control section (scheduler) 301, a transmission signal generating section (generating section) 302, a mapping section 303, a received signal processing section 304 and a measurement section 305.

The control section (scheduler) 301 controls the whole of the radio base station 10. Note that, when a licensed band and an unlicensed band are scheduled with one control section (scheduler) 301, the control section 301 controls communication in the licensed band cells and the unlicensed band cells. For the control section 301, a controller, a control circuit or a control device that can be described based on common understanding of the technical field to which the present invention pertains can be used.

The control section 301, for example, controls the generation of signals in the transmission signal generating section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of downlink data signals that are transmitted in the PDSCH and downlink control signals that are communicated in the PDCCH and/or the EPDCCH. Also, the control section 301 controls the scheduling of downlink reference signals such as synchronization signals (the PSS (Primary Synchronization Signal) and the SSS (Secondary Synchronization Signal)), the CRS, the CSI-RS, the DM-RS and so on.

Also, the control section 301 controls the scheduling of uplink data signals transmitted in the PUSCH, uplink control signals transmitted in the PUCCH and/or the PUSCH (for example, delivery acknowledgement signals (HARQ-ACKs)), random access preambles transmitted in the PRACH, uplink reference signals and so on.

The control section 301 controls the transmission of downlink signals in the transmission signal generating section 302 and the mapping section 303 in accordance with the results of LBT acquired in the measurement section 305. To be more specific, when a DS is transmitted in a licensed band, in order to allow a user terminal 20 to specify the index of the subframe in which the synchronization signals are transmitted, the control section 301 controls the generation, mapping and transmission of this synchronization signals.

The control section 301 controls the DS so that a synchronization signal that is different from an existing SSS (SSS and/or eSSS) is included in the DS. The control section 301 generates this synchronization signal in association with a subframe index. For example, the control section 301 may exert control so that the SSS to be included in the DS is generated by using a sequence (for example, a 42-length sequences) that is associated with the transmission timing of this SSS and that is different from one for an existing SSS (first embodiment).

Also, the control section 301 may exert control so that the SSS to be included in the DS is mapped to and transmitted in one of candidate resources that include resources that are different from ones for an existing SSS (second embodiment). Also, the control section 301 may control the PSS to be included in the DS to be mapped to and transmitted in a resource that is different from one for the existing PSS.

Also, the control section 301 may include and transmit another signal (for example, an eSSS) that is for use for specifying the subframe index of an existing SSS, in the DS (third embodiment). Also, the control section 301 may control the PSS to be included in the DS to be mapped to and transmitted in a resource that is different from one for the existing PSS.

The transmission signal generating section 302 generates downlink signals (downlink control signals, downlink data signals, downlink reference signals and so on) based on commands from the control section 301, and outputs these signals to the mapping section 303. The transmission signal generating section 302 can be constituted by a signal generator, a signal generating circuit or a signal generating device that can be described based on common understanding of the technical field to which the present invention pertains.

For example, the transmission signal generating section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are determined based on, for example, channel state information (CSI: Channel State Information) reported from each user terminal. Also, the transmission signal generating section 302 generates a DS that includes a PSS and an SSS (and/or an eSSS).

The mapping section 303 maps the downlink signals generated in the transmission signal generating section 302 to predetermined radio resources based on commands from the control section 301, and outputs these to the transmitting/receiving sections 103. The mapping section 303 can be constituted by a mapper, a mapping circuit or a mapping device that can be described based on common understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). The received signal processing section 304 can be constituted by a signal processor, a signal processing circuit or a signal processing device that can be described based on common understanding of the technical field to which the present invention pertains.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or a measurement device that can be described based on common understanding of the technical field to which the present invention pertains.

The measurement section 305 executes LBT in a carrier where LBT is configured (for example, an unlicensed band) based on commands from the control section 301, and outputs the results of LBT (for example, judgments as to whether the channel state is idle or busy) to the control section 301.

Also, by using the receive signals, the received signal processing section 404 may measure the received power (for example, the RSRP (Reference Signal Received Power)), the received quality (RSRQ (Reference Signal Received Quality)), channel states and so on. The measurement results may be output to the control section 301.

(User terminal)

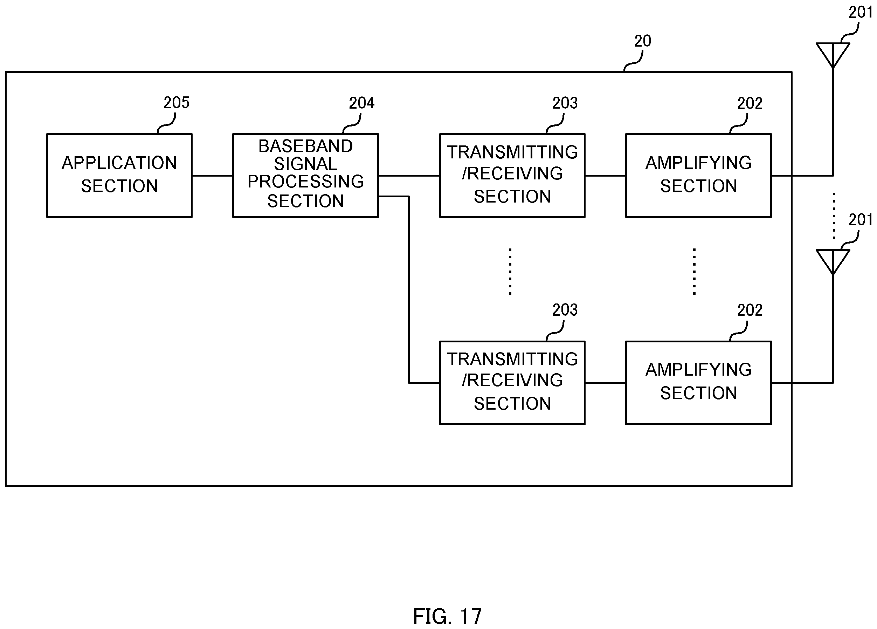

FIG. 17 is a diagram to show an example of an overall structure of a user terminal according to an embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in a plurality of transmitting/receiving antennas 201 are each amplified in the amplifying sections 202. Each transmitting/receiving section 203 receives the downlink signals amplified in the amplifying sections 202. The received signals are subjected to frequency conversion and converted into the baseband signal in the transmitting/receiving sections 203, and output to the baseband signal processing section 204. The transmitting/receiving sections 203 are capable of transmitting/receiving UL/DL signals in unlicensed bands. Note that the transmitting/receiving sections 203 may be capable of transmitting/receiving UL/DL signals in licensed bands as well.

The transmitting/receiving sections 203 can be constituted by transmitters/receivers, transmitting/receiving circuits or transmitting/receiving devices that can be described based on common understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 receive downlink signals transmitted from the radio base station 10, by using at least an unlicensed band. For example, the transmitting/receiving sections 203 receive a DS, which includes an SSS that is different from an existing SSS, in an unlicensed band, in a DMTC duration that is configured by the radio base station 10. Also, the transmitting/receiving sections 203 may receive the existing PSS/SSS in a licensed band and/or an unlicensed band.

Also, the transmitting/receiving sections 203 transmit uplink signals to the radio base station 10 by at least using an unlicensed band. For example, the transmitting/receiving sections 203 may transmit DS RRM measurement results (for example, CSI feedback and/or the like) in a licensed band and/or an unlicensed band.

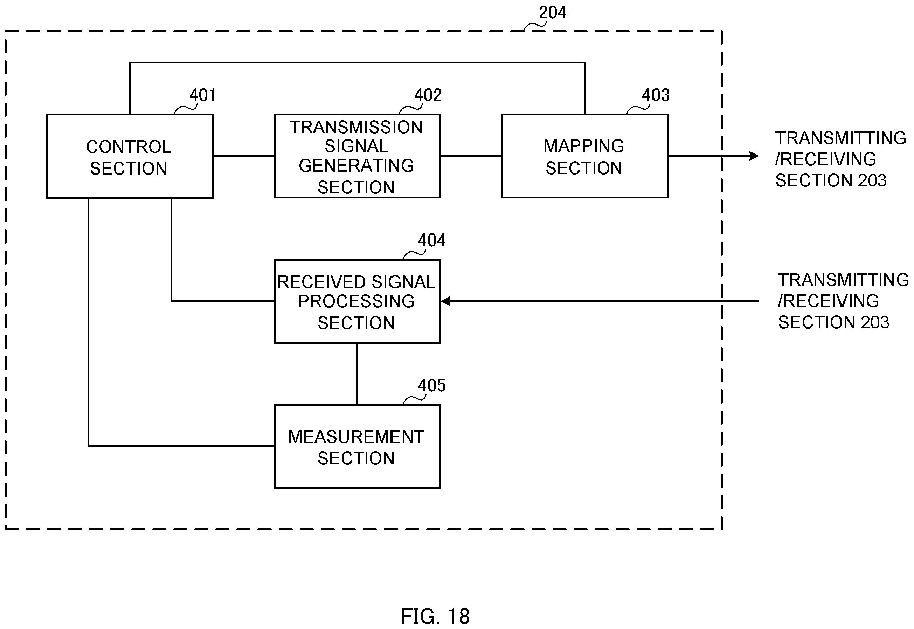

FIG. 18 is a diagram to show an example of a functional structure of a user terminal according to one embodiment of the present invention. Note that, although FIG. 18 primarily shows functional blocks that pertain to characteristic parts of the present embodiment, the user terminal 20 has other functional blocks that are necessary for radio communication as well. As shown in FIG. 18, the baseband signal processing section 204 provided in the user terminal 20 at least has a control section 401, a transmission signal generating section 402, a mapping section 403, a received signal processing section 404 and a measurement section 405.

The control section 401 controls the whole of the user terminal 20. The control section 401 can be constituted by a controller, a control circuit or a control device that can be described based on common understanding of the technical field to which the present invention pertains.

The control section 401, for example, controls the generation of signals in the transmission signal generating section 402, the allocation of signals by the mapping section 403, and so on. Furthermore, the control section 401 controls the signal receiving processes in the received signal processing section 404, the measurements of signals in the measurement section 405, and so on.

The control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not retransmission control is necessary for the downlink data signals, and so on.

The control section 401 controls the transmission of uplink signals in the transmission signal generating section 402 and the mapping section 403 in accordance with the results of LBT acquired in the measurement section 305. Also, the control section 401 controls the received signal processing section 404 and the measurement section 405 to perform RRM measurement, cell search and so on, in unlicensed bands, using the DS (LAA DS).

To be more specific, the control section 401 may exert control so that, based on a signal (SSS and/or eSSS) that is different from an existing SSS, the index of the subframe in which the DS is received (and/or in which the signal is received) is specified. Also, the control section 401 may exert control so that the index of the subframe index in which the SSS of the DS is received is acquired by detecting the PSS/SSS in the PCell.

Also, the control section 401 may exert control so that the received power, the received quality and/or the channel states, measured in the measurement section 405 by using the reference signals (for example, the CRS, the CSI-RS and so on) included in the LAA DS, are acquired, and, based on these, feedback information (for example, CSI) is generated and transmitted to the radio base station 10.

The transmission signal generating section 402 generates uplink signals (uplink control signals, uplink data signals, uplink reference signals and so on) based on commands from the control section 401, and outputs these signals to the mapping section 403. The transmission signal generating section 402 can be constituted by a signal generator, a signal generating circuit or a signal generating device that can be described based on common understanding of the technical field to which the present invention pertains.

For example, the transmission signal generating section 402 generates uplink control signals such as delivery acknowledgement signals (HARQ-ACKs), channel state information (CSI) and so on, based on commands from the control section 401. Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal.

The mapping section 403 maps the uplink signals generated in the transmission signal generating section 402 to radio resources based on commands from the control section 401, and output the result to the transmitting/receiving sections 203. The mapping section 403 can be constituted by a mapper, a mapping circuit or a mapping device that can be described based on common understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or a signal processing device that can be described based on common understanding of the technical field to which the present invention pertains. Also, the received signal processing section 404 can constitute the receiving section according to the present invention.

The received signal processing section 404 output the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals, the signals after the receiving processes and so on to the measurement section 405.

The measurement section 405 conducts measurements with respect to the received signals. The measurement section 405 can be constituted by a measurer, a measurement circuit or a measurement device that can be described based on common understanding of the technical field to which the present invention pertains.

The measurement section 405 executes LBT in a carrier where LBT is configured (for example, an unlicensed band) based on commands from the control section 401, and outputs the results of LBT (for example, judgments as to whether the channel state is idle or busy) to the control section 401.

Also, the measurement section 405 may measure the received power (for example, RSRP), the received quality (for example, RSRQ), the channel states and so on of the received signals. For example, the measurement section performs RRM measurements of the LAA DS. The measurement results may be output to the control section 401.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of radio base stations 10 and user terminals 20 may be implemented using hardware such as ASICs (Application-Specific Integrated Circuits), PLDs (Programmable Logic Devices), FPGAs (Field Programmable Gate Arrays), and so on. Also, the radio base stations 10 and user terminals 20 may be implemented with a computer device that includes a processor (CPU), a communication interface for connecting with networks, a memory and a computer-readable storage medium that holds programs. That is, radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The example s/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (MIBs (Master Information Blocks) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G (4th generation mobile communication system), 5G (5th generation mobile communication system), FRA (Future Radio Access), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the example s/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2015-159999, filed on August 13, 2015, including the specification, drawings and abstract, is incorporated herein by reference in its entirety.

**Claims**

1. A user terminal that communicates by using a cell in which listening is executed before signals are transmitted, the user terminal comprising:

   a receiving section that receives a discovery signal, which includes a first synchronization signal and a second synchronization signal; and
   a control section that specifies an index of a subframe, in which the second synchronization signal is received, wherein the second synchronization signal is a different signal from an SSS (Secondary Synchronization Signal) used in an existing system.

2. The user terminal according to claim 1, wherein the second synchronization signal is generated by using a sequence that is associated with a transmission timing of the second synchronization signal and that is different from one for the SSS used the existing system.

3. The user terminal according to claim 1 or claim 2, wherein the second synchronization signal is transmitted in one of a plurality of candidate resources that are associated with the transmission timing of the second synchronization signal.

4. The user terminal according to claim 3, wherein, in the plurality of candidate resources, a subcarrier in which the second synchronization signal is actually transmitted adjoins a subcarrier in which the second synchronization signal can be transmitted using another candidate resource.

5. The user terminal according to claim 3 or claim 4, wherein the plurality of candidate resources include a resource which is a frequency resource that is the same as one for the SSS used in the existing system and which is a time resource that is different from one for the SSS used in the existing system.

6. The user terminal according to one of claim 1 to claim 5, wherein the first synchronization signal is transmitted in a radio resource that is different from one for a PSS (Primary Synchronization Signal) used in the existing system.

7. The user terminal according to one of claim 1 to claim 6, wherein the plurality of candidate resources include a radio resource that is arranged in the same symbol period with the first synchronization signal.

8. The user terminal according to claim 1, wherein:

the receiving section receives a third synchronization signal; and
the control section specifies the index of the subframe, in which the second synchronization signal is received, based on the second synchronization signal and the third synchronization signal.

9. A radio base station that communicates with a user terminal by using a cell in which listening is executed before signals are transmitted, the radio base station comprising:

a generation section that generates a discovery signal, which includes a first synchronization signal and a second synchronization signal; and
a transmission section that transmits the discovery signal,
wherein the second synchronization signal is a different signal from an SSS (Secondary Synchronization Signal) used in an existing system.

10. A radio communication method for a user terminal that communicates by using a cell in which listening is executed before signals are transmitted, the radio communication method comprising the steps of:

receiving a discovery signal, which includes a first synchronization signal and a second synchronization signal; and
specifying an index of a subframe, in which the second synchronization signal is received,
wherein the second synchronization signal is a different signal from an SSS (Secondary Synchronization Signal) used in an existing system.

EP 3 337 252 A1

FIG. 1A

Legacy PSS/SSS position (FDD)

| | | | | | | | | | |
|#0|#1|#2|#3|#4|#5|#6|#7|#8|#9|

SSS Seq #0 -> subframe #0

SSS Seq #1 -> subframe #5

FIG. 1B

DMTC (e.g., 6 ms duration)

1 subframe

Time

PSS/SSS in DRS for LAA

Cell #1

Cell #2

Cell #3

SSS Seq #0/#1 -> subframe #??

DRS occasion

PSS  LBT_busy

SSS  LBT_idle

DMTC (e.g., 6 ms duration)

| subframe #3 | subframe #4 | subframe #5 | subframe #6 | subframe #7 | subframe #8 |

1 subframe

Time

Cell #1 → SSS Seq #3

Cell #2 → SSS Seq #8

Cell #3 → SSS Seq #4

DRS occasion

PSS          LBT$_{busy}$

SSS          LBT$_{idle}$

FIG. 2

EP 3 337 252 A1

FIG. 3A

5 guard
subcarriers in
each end

62 subcarriers (not including DC carrier)

SSS$_1$ in
Subframe #0

72 subcarriers (not including DC carrier)

Freq.

FIG. 3B

5 guard
subcarriers in
each end

62 subcarriers (not including DC carrier)

SSS$_2$ in
Subframe #5

72 subcarriers (not including DC carrier)

Freq.

EP 3 337 252 A1

| $N_{ID}^{(1)}$ | $m_0$ | $m_1$ |
|---|---|---|
| 0 | 0 | 1 |
| 1 | 1 | 2 |
| 2 | 2 | 3 |
| 3 | 3 | 4 |
| 4 | 4 | 5 |
| 5 | 5 | 6 |
| ... | | |
| 28 | 28 | 29 |
| 29 | 29 | 30 |
| 30 | 0 | 2 |
| 31 | 1 | 3 |
| ... | | |
| 161 | 21 | 27 |
| 162 | 22 | 28 |
| 163 | 23 | 29 |
| 164 | 24 | 30 |
| 165 | 0 | 7 |
| 166 | 1 | 8 |
| 167 | 2 | 9 |

FIG. 4

FIG. 5A

SSS₁ in
Subframe #0-#4

6 guard
subcarriers in
each end

84 subcarriers (not including DC carrier)

96 subcarriers (not including DC carrier)

Freq.

FIG. 5B

SSS₂ in
Subframe #5-#9

6 guard
subcarriers in
each end

84 subcarriers (not including DC carrier)

96 subcarriers (not including DC carrier)

Freq.

| $N_{ID}^{(1)}$ | N | $m_0$ | $m_1$ |
|---|---|---|---|
| 0 | 0 | 0 | 1 |
| 0 | 1 | 1 | 2 |
| 0 | 2 | 2 | 3 |
| 0 | 3 | 3 | 4 |
| 0 | 4 | 4 | 5 |
| 1 | 0 | 5 | 6 |
| … | | | |
| 8 | 0 | 40 | 41 |
| 8 | 1 | 0 | 2 |
| 8 | 2 | 1 | 3 |
| 8 | 3 | 2 | 4 |
| … | | | |
| 16 | 0 | 39 | 41 |
| 16 | 1 | 0 | 3 |
| 16 | 2 | 1 | 4 |
| … | | | |
| 166 | 3 | 0 | 35 |
| 166 | 4 | 1 | 36 |
| 167 | 0 | 2 | 37 |
| 167 | 1 | 3 | 38 |
| 167 | 2 | 4 | 39 |
| 167 | 3 | 5 | 40 |
| 167 | 4 | 6 | 41 |

FIG. 6

| Subframe number | 0 | 1 | 2 | 3 | 4 | 5 | 6 | 7 | 8 | 9 |
|---|---|---|---|---|---|---|---|---|---|---|
| Scramble Seq. number | 0 | 0 | 0 | 0 | 0 | 1 | 1 | 1 | 1 | 1 |
| Resource Cfg. number | 0 | 1 | 2 | 3 | 4 | 0 | 1 | 2 | 3 | 4 |

FIG. 7

FIG. 8A

FIG. 8B

FIG. 8C

FIG. 9A

FIG. 9B

≧5MHz
(LAA)

945kHz

#3  #1  #0

#2  #4

Seq#0, Cfg#3
-> subframe #3

Symbol  #0 #1 #2 #3 #4 #5 #6 #0 #1

Symbol  #0 #1 #2 #3 #4 #5 #6 #0

PSS    SSS    CRS

PSS    SSS    CRS

RS/PDSCH/EPDCCH/Control info.

EP 3 337 252 A1

FIG. 10A

FIG. 10B

FIG. 10C

#3 #1

945kHz

≧5MHz
(LAA)

945kHz

#0

PSS location
for SSS Cfg#0

945kHz

PSS location
for SSS Cfg#1-4

#4 #2

Seq#0, Cfg#1
-> subframe #1

Seq#0, Cfg#3
-> subframe #3

Symbol  #0 #1 #2 #3 #4 #5 #6 #0 #1

#0 #1 #2 #3 #4 #5 #6 #0 #1

#0 #1 #2 #3 #4 #5 #6 #0 #1

⊞ PSS    ⊡ SSS    ⊿ CRS

⊞ PSS    ⊡ SSS    ⊿ CRS

⊞ PSS    ⊡ SSS    ⊿ CRS

⊞ RS/PDSCH/EPDCCH/Control info.

⊞ RS/PDSCH/EPDCCH/Control info.

## FIG. 11A

≧5MHz (LAA)

945kHz

945kHz

945kHz

#1   #3

#0

#2   #4

Symbol   #2 #3 #4 #5 #6 #0

▦ PSS    ▦ SSS    ▧ CRS

## FIG. 11B

Seq#0, Cfg#4
-> subframe #4

Symbol   #2 #3 #4 #5 #6 #0

▦ PSS    ▦ SSS    ▧ CRS

▭ RS/PDSCH/EPDCCH/Control info.

EP 3 337 252 A1

| N | $m_0$ | $m_1$ |
|---|-------|-------|
| 0 | 0 | 1 |
| 1 | 1 | 2 |
| 2 | 2 | 3 |
| 3 | 3 | 4 |
| 4 | 4 | 5 |
| … | | |

FIG. 12

FIG. 13B

945kHz 945kHz 945kHz

Symbol #0 #1 #2 #3 #4 #5 #6 #0 #1

PSS   SSS   eSSS
      CRS

FIG. 13A

≧5MHz
(LAA)

945kHz

Symbol #0 #1 #2 #3 #4 #5 #6 #0 #1 #2 #3 #4

PSS   SSS   eSSS
CSI-RS   CRS

FIG. 14

FIG. 15

10

101

AMPLIFYING SECTION 102

TRANSMITTING /RECEIVING SECTION 103

BASEBAND SIGNAL PROCESSING SECTION 104

COMMUNICATION PATH INTERFACE 106

101

...

AMPLIFYING SECTION 102

...

TRANSMITTING /RECEIVING SECTION 103

CALL PROCESSING SECTION 105

TO HIGHER STATION APPARATUS 30 OR OTHER RADIO BASE STATION 10

FIG. 16

EP 3 337 252 A1

FIG. 17

EP 3 337 252 A1

FIG. 18

Mapping section 403 → Transmitting /Receiving Section 203

Transmission signal generating section 402

Control section 401

Received signal processing section 404 ← Transmitting /Receiving Section 203

Measurement section 405

204

## INTERNATIONAL SEARCH REPORT

| International application No. |
|---|
| PCT/JP2016/073262 |

**A. CLASSIFICATION OF SUBJECT MATTER**
*H04W56/00(2009.01)i, H04W16/14(2009.01)i, H04W72/04(2009.01)i*

According to International Patent Classification (IPC) or to both national classification and IPC

**B. FIELDS SEARCHED**

Minimum documentation searched (classification system followed by classification symbols)
H04W4/00-99/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | COOLPAD, Discussion on DL reference signal transmission for LAA, 3GPP TSG RAN WG1 Meeting #81 R1-153306, 2015.05.15, passage 2 | 1,9,10<br>2-8 |
| X<br>A | CATT, UE measurements for LAA, 3GPP TSG RAN WG1 Meeting #80bis R1-151359, 2015.04.11, passages 1 to 2.1 | 9<br>1-8,10 |
| A | NTT DOCOMO, INC., Views on RRM measurement and corresponding DRS design for LAA, 3GPP TSG RAN WG1 Meeting #81 R1-153180, 2015.05.16, passage 2 | 1-10 |
| P,X<br>P,A | NTT DOCOMO, INC., Discussion on DRS design for LAA, 3GPP TSG RAN WG1 Meeting #82 R1-154405, 2015.08.15, entire text, all drawings | 1-5,7,9,10<br>6,8 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 September 2016 (20.09.16) | 04 October 2016 (04.10.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**EP 3 337 252 A1**

**Patent documents cited in the description**

- JP 2015159999 A